# EUROPÄISCHE PATENTSCHRIFT

(11) **EP 3 691 769 B1**
(45) Veröffentlichungstag und Bekanntmachung des Hinweises auf die Patenterteilung: **22.06.2022**
(21) Anmeldenummer: 18778856.7
(22) Anmeldetag: 19.09.2018
(51) Int. Cl.: B01D 35/153, B01D 35/30, B01D 36/00, B01D 29/21

(54) **FILTERELEMENT MIT ENTLÜFTUNGSFUNKTION FÜR DEN HÄNGENDEN ANSCHLUSS AN EINEM FILTERKOPF SOWIE FILTERSYSTEM**
FILTER ELEMENT WITH VENTING FUNCTION FOR SUSPENSION ON A FILTER HEAD, AND FILTER SYSTEM
ÉLÉMENT FILTRANT COMPRENANT UNE FONCTION D'ÉVACUATION D'AIR POUR LE RACCORD SUSPENDU À UNE TÊTE DE FILTRE AINSI QUE SYSTÈME DE FILTRATION

(30) Priorität: 05.10.2017 DE 102017009255
(43) Veröffentlichungstag der Anmeldung: 12.08.2020
(73) Patentinhaber: MANN+HUMMEL GmbH, 71636 Ludwigsburg (DE)
(72) Erfinder: WEINDORF, Martin, 70806 Kornwestheim (DE)
(74) Vertreter: Mann + Hummel Intellectual Property
(86) Internationale Anmeldenummer: PCT/EP2018/075356
(87) Internationale Veröffentlichungsnummer: WO 2019/068470

(56) Entgegenhaltungen:
- WO-A1-2007/010037
- WO-A1-2017/151481
- DE-A1- 19 519 352
- DE-A1-102016 000 340
- DE-U1-202007 008 483
- US-A1- 2012 168 359

## Beschreibung

### Technisches Gebiet

Die Erfindung betrifft ein Filterelement für ein Fluid, insbesondere Kraftstoff oder Öl, das zum hängenden Anschluss an einem Filterkopf vorgesehen ist, mit einem Filtermedium, das zur Längsachse des Filterelements ringförmig angeordnet und von dem zu filternden Fluid in einer radialen Richtung durchströmbar ist. Das Filterelement weist eine erste Endscheibe auf. Darüber hinaus betrifft die Erfindung ein Filtersystem mit einem solchen Filterelement.

### Stand der Technik

Filterelemente, insbesondere für Kraftstoff oder Öl, werden für den Betriebseinsatz häufig für einen hängenden Anbau an einem Filterkopf ausgelegt. Die Filterelemente können dabei nach einer Bauart als ein Filtereinsatz ausgeführt sein, der in einem Filtergehäuse austauschbar anordenbar ist. Nach einer anderen gängigen Bauart sind die Filterelemente als sog. Wechselfilter mit einer Umhausung ausgeführt, die einen integralen Bestandteil des Filterelements darstellt. Die Filterelemente sind in der Regel Verschleißteile und müssen in der Praxis selbst bei beengten Einbauverhältnissen, wie diese im Automobilsektor üblich sind, auf einfache und unkomplizierte Weise ausgetauscht werden können. Die Anforderungen an Filterelemente nehmen aufgrund der Leistungssteigerung nachgeschalteter Aggregate ständig zu. So wird neben einem ausreichend großen Filtrationsvermögen bei zugleich kompaktem Aufbau häufig eine Entlüftungsmöglichkeit des Filterelements während des Betriebseinsatzes gefordert. Sammelt sich im Filterbetrieb beispielsweise reinseitig Luft im Filterelement an, so kann dadurch ein Druckaufbau des reinseitig angeordneten gefilterten Fluids erschwert bzw. verzögert werden. Dies ist insbesondere beim Filtern von Kraftstoffen bei Kraftfahrzeugen mit Verbrennungsmotor und einem sog. Start-Stopp Automatikbetrieb nachteilig. Auch durch auf der Rohseite angesammelte Luft kann der Fluidstrom des Fluids durch den Filter behindert werden. Bei Filterelementen, die im Betriebseinsatz hängend austauschbar an einem Filterkopf angeschlossen sind, ist die Entlüftung des Filterelements bislang allerdings mit einem hohen konstruktiven Aufwand auf Seiten des Filterelements wie auch des zum Anschluss des Filterelements vorgesehenen Filterkopfs verbunden. Derlei Filterelemente und Filterköpfe sind deshalb in der Herstellung häufig recht kostenaufwendig.

Aus DE 10 2013 226 810 A1 ist ein Fluidfilter mit Entlüftung bekannt, der einen filtergehäuseseitigen Auslassstutzen hat, der eine zentrische Entlüftung und an einer diskreten Umfangsposition einen radial dazu versetzt angeordneten Entlüftungskanal aufweist. Der Entlüftungskanal erstreckt sich axial und mündet in einen Fluidauslasskanal, wobei der Entlüftungskanal in einer nach radial innen gerichteten Einbuchtung eines kreisförmigen Querschnitts des Auslassstutzens untergebracht ist. Das Filterelement hat dort als Schnittstelle eine einfache radial gedichtete Endscheibenöffnung.

Ein ähnlicher Filter mit Entlüftungsfunktion ist auch aus DE 198 35 525 C1 bekannt. Auch dort verläuft der Entlüftungskanal an einer diskreten Umfangsposition, erstreckt sich jedoch in Radialrichtung.

Das Dokument DE102016000340 A1 offenbart ein Filterelement mit einer Entlüftungseinrichtung.

Es ist deshalb die Aufgabe der Erfindung, ein Filtersystem sowie ein eingangs genanntes Filterelement mit Entlüftungsfunktion anzugeben, die einfach und kostengünstig herzustellen sind und eine einfache und sichere Montage sowie Demontage des Filterelements erlauben.

Die erfindungsgemäße Aufgabe wird durch ein Filterelement mit den in Patentanspruch 1 angegebenen Merkmalen gelöst. Das erfindungsgemäße Filtersystem weist die in Anspruch 11 angegebenen Merkmale auf. Weiterbildungen der Erfindung sind in den Unteransprüchen angegeben.

### Offenbarung der Erfindung

Gemäß der vorliegenden Erfindung weist das Filterelement an seinem im Filterbetrieb nach oben weisenden Ende einen Koaxialauslassstutzen auf, der einen Fluidauslasskanal für das gefilterte Fluid und einen Entlüftungskanal zur rein- und/oder rohseitigen Entlüftung des Filterelements aufweist. Dabei umgibt der Entlüftungskanal den Fluidauslasskanal in einer radialen Richtung koaxial und verläuft zumindest abschnittsweise in Axialrichtung. Der Entlüftungskanal ist hierbei insbesondere als Ringkanal, insbesondere als Kreisringkanal, ausgebildet, der den Fluidauslasskanal für das gefilterte Fluid radial umgibt.

Durch den Koaxialauslassstutzen kann das Filterelement mit nur einer auslassseitigen Anschlussschnittstelle für den Filterkopf ausgeführt werden. Dies ermöglicht eine kostengünstige Herstellung des Filterelements und einen besonders kompakten Aufbau, so dass das Filterelement selbst bei beengten Einbaubedingungen eingesetzt werden kann. Zugleich kann die Montage und Demontage des Filterelements am Filterkopf deutlich vereinfacht und beschleunigt werden.

Nach einer besonders bevorzugten Weiterbildung der Erfindung weist der Koaxialauslassstutzen einenends ein oder mehrere Betätigungsglieder für einen Ventilkörper des Filterkopfs auf, die sich vorzugsweise in axialer Richtung vom Fluidauslasskanal weg erstrecken und wobei zumindest zwischen zwei der mehreren Betätigungsglieder eine radiale Durchtrittsöffnung für das gefilterte Fluid ausgebildet ist. Insbesondere sind die Betätigungsglieder so an dem Fluidauslasskanal angeordnet, dass diese in einem regelmäßigen Winkelabständen zueinander vorliegen und eine kronenförmige Struktur bilden. Das/die Betätigungsglied(er) ist/sind an dem Koaxialauslassstutzen vorzugsweise angeformt, d. h. einstückig mit diesem ausgebildet. Dadurch kann der Koaxialauslassstutzen kostengünstig als Spritzgussteil ausgeführt werden. Dies bietet insbesondere bei der üblichen Massenfertigung von Filterelementen Vorteile. Das einzelne Betätigungsglied bzw. die mehreren Betätigungsglieder können insbesondere steg-, zungen- oder auch bogenförmig ausgeführt sein. Der filterkopfseitige Ventilkörper ist einem reinseitigen Auslass des Filterelements nachgeschaltet. Bei dem Ventilkörper kann es sich insbesondere um ein sog. Serviceventil handeln, das nach dem Herausnehmen des Filterelements die reinseitige Abströmung verschließt, um ein Leerlaufen des nachgeschalteten Fluidsystems zu verhindern.

Der Entlüftungskanal ist eingangsseitig über einen ersten Kapillarkanal mit einer dem Filtermedium fluidisch vorgeschalteten Rohseite des Filtermediums verbunden. Der erste Kapillarkanal kann dabei insbesondere in radialer Richtung innenseitig durch den Koaxialauslassstutzen und in radialer Richtung au-βenseitig durch einen ersten Wandabschnitt der ersten Endscheibe des Filterelements begrenzt sein. Andererseits bietet der Kapillarkanal einen ausreichend großen Strömungswiderstand für das zu filternde Fluid, so dass dies während des Betriebseinsatzes nicht oder nur in begrenzter Menge über den Entlüftungskanal austreten kann. Durch den Kapillarkanal kann einerseits eine bedarfsgerechte Entlüftung des Filterelements auf dessen Rohseite erreicht werden.

Zur reinseitigen Entlüftung des Filterelements kann der Entlüftungskanal eingangsseitig über einen zweiten Kapillarkanal mit einer dem Filtermedium fluidisch nachgeschaltet angeordneten Reinseite des Filterelements verbunden sein. Der zweite Kapillarkanal ist dabei in radialer Richtung vorzugsweise einerseits durch einen Endabschnitt eines rohrförmigen Stützkörpers des Filterelements, insbesondere durch ein an sich bekanntes Mittelrohr, und andererseits durch einen Wandabschnitt der ersten Endscheibe des Filterelements, begrenzt. Dadurch können sich zusätzliche Bauteile des Filterelements erübrigen. Weist das Filterelement sowohl eine rohseitige als auch eine reinseitige Entlüftung auf, so kann ein rein- als auch rohseitig angeordnetes kompressibles Luftvolumen zügig über den Entlüftungskanal aus dem Filterelement ausgetragen werden. Insgesamt kann dadurch ein zügigerer Druckaufbau des Fluids erreicht werden. Aufgrund der reinseitigen Entlüftung kann das gefilterte Fluid mithin unverzüglich nach Aufnahme des Filterbetriebs mit einem ausreichenden Druck bzw. einem für den jeweiligen Verwendungszweck ausreichenden Volumenstrom zur Verfügung gestellt werden. Dies ist insbesondere bei Einsatz des Filterelements als Kraftstofffilter bei Kraftfahrzeugen mit Verbrennungsmotor und bei einem sog. Start-Stopp Automatikbetrieb von Vorteil.

Der Endabschnitt des rohrförmigen Stützkörpers kann nach einer bevorzugten Ausführungsform des Filterelements in axialer Richtung in eine Ringnut der Endscheibe eingreifen, die in radialer Richtung innenseitig durch einen ersten Wandabschnitt der Endscheibe und außenseitig durch einen zweiten Wandabschnitt der Endscheibe begrenzt ist. Der erste und der zweite Wandabschnitt sind in diesem Fall vorteilhaft über einen Rückenabschnitt miteinander einstückig verbunden. Dadurch kann die erste Endscheibe kostengünstig, beispielsweise als ein Spritzgussteil, ausgeführt werden.

Der Koaxialauslassstutzen kann erfindungsgemäß einteilig oder mehrteilig, insbesondere zweiteilig, ausgeführt sein. Im letztgenannten Fall kann der Koaxialauslassstutzen zwei koaxial angeordnete Stutzensegmente umfassen. Der Entlüftungskanal kann durch die beiden Stutzensegmente in radialer Richtung beiderseitig umlaufend begrenzt sein. An einem der beiden Stutzensegmente oder auch an beiden Stutzensegmenten können ein oder mehrere Abstandselemente, beispielsweise Rippen oder Noppen, angeformt sein, über die sich die beiden Stutzensegmente aneinander abstützen.

Das Filterelement kann nach der Erfindung eine zweite Endscheibe umfassen, wobei das Filtermedium in axialer Richtung zwischen der ersten und der zweiten Endscheibe angeordnet und stirnseitig an den beiden Endscheiben befestigt, insbesondere mit den Endscheiben verklebt, verschweißt oder im Material der beiden Endscheiben eingebettet gehalten angeordnet ist.

Bevorzugt ist jeder der vorstehend erläuterten Kapillarkanäle jeweils über einen Siphon mit dem Entlüftungsauslass fluidisch verbunden. Weist das Filterelement einen Kapillarkanal mit der Reinseite und einen mit der Rohseite fluidisch verbundenen Kapillarkanal auf, so können diese beiden Kapillarkanäle vorteilhaft über einen gemeinsamen Siphon mit dem Entlüftungskanal fluidisch verbunden sein. Durch den Siphon kann im Falle einer Unterbrechung des Filterbetriebs des Filterelements, wie dies beispielsweise beim Abschalten eines mit dem Fluid betriebenen Verbrennungsmotors eines Kraftfahrzeugs der Fall ist, einem unerwünschten retrograden Eintrag von Luft aus dem Entlüftungsrohr über den ersten Entlüftungskanal auf die Reinseite bzw. über den zweiten Entlüftungskanal auf die Rohseite des Filterelements entgegengewirkt werden. Darüber hinaus kann, sofern der erste wie auch der zweite Entlüftungskanal in den Siphon münden, einem unerwünschten Eintrag von Luft von der Rohseite auf die vom Fluid durchströmte Reinseite des Filterelements entgegengewirkt werden.

Jeder Kapillarkanal kann zumindest abschnittsweise in streng axialer Richtung verlaufend oder zumindest abschnittsweise schraubenförmig um die Längsachse verlaufend ausgebildet sein. Die spiralförmige Ausbildung eines Kapillarkanals geht mit einer größeren Länge des jeweiligen Kapillarkanals einher. Dadurch kann der jeweilige Kapillarkanal bei einem gegenüber einer geraden Ausführung des Kanals unveränderten Strömungswiderstand mit einem fertigungstechnisch vorteilhaften größeren Querschnitt ausgebildet sein.

Das Filterelement kann nach einer besonders bevorzugten Weiterbildung der Erfindung von einer Umhausung umgeben sein, die einen integralen Bestandteil des Filterelements darstellt. Derlei Filterelemente werden in der Praxis allgemein als Wechselfilter bezeichnet. Derlei Wechselfilter werden im Bedarfsfall als Baueinheit ausgetauscht und entsorgt. Zu beachten ist, dass die vorstehend erläuterte Endscheibe, die im Betriebseinsatz des Filterelements in Lotrichtung nach oben weisend angeordnet ist, bei dieser Bauform auch Teil der Umhausung des Filterelements sein kann. So kann die Endscheibe beispielsweise in Form einer Lochscheibe mit exzentrisch angeordneten Einströmöffnungen für das zu filternde Fluid ausgeführt sein. Es versteht sich, dass das als Wechselfilter ausgebildete Filterelement zwei Endscheiben aufweisen kann, die in axialer Richtung hintereinanderliegend angeordnet und im Betriebseinsatz in Lotrichtung nach oben weisen.

Gemäß einer weiteren Ausführungsform kann das Filterelement zumindest ein Teil einer Bajonettverbindung aufweisen, mit dem das Filterelement lösbar mit zumindest einem Gehäusebauteil, insbesondere einem Gehäusedeckel eines Filtersystems, koppelbar ist. Vorteilhafterweise liegt das Bajonettverbindungsteil an einem dem Koaxialauslassstutzen abgewandten Ende des Filterelements vor, das besonders bevorzugt im Filterbetrieb in Lotrichtung nach unten weist. Das filterelementseitige Bajonettverbindungsteil kann insbesondere an einer zweiten Endscheibe vorgesehen sein, die eine untere Endscheibe bildet. Dadurch kann das Filterelement mit einem geringeren Verschmutzungsrisiko zusammen mit Gehäusedeckel aus dem Filtersystem entnommen werden. Ferner kann vorteilhaft beim derartigen Entnehmen des Filterelements über den Gehäusedeckel der Koaxialanschlussstutzen aus dem Filterkopf gezogen werden.

Das erfindungsgemäße Filtersystem dient dem Filtern eines Fluids, insbesondere Kraftstoff oder Öl, und umfasst einen Filterkopf mit einer Fluideinlassleitung für das zu filternde Fluid, einer Fluidauslassleitung für das gefilterte Fluid und einer Entlüftungsleitung zum Entlüften des Filterelements. Am Filterkopf ist ein Filterelement hängend austauschbar anschließbar, wie dies vorstehend erläutert wurde. Das Filterelement kann als ein Filtereinsatz oder als Wechselfilter ausgeführt sein.

Gegenüber Entlüftungslösungen aus dem Stand der Technik, bei denen die Entlüftung durch eine filterelementseitige Drosselbohrung zwischen Roh- und Reinseite (beispielsweise in der Endscheibe) realisiert wird, besteht bei der erfindungsgemäßen Lösung mit separatem Entlüftungskanal der Vorteil, dass während des Betriebs nicht ständig ein ungefilterter Bypassvolumenstrom auftritt; dies erhöht die Abscheideleistung des Filtersystems.

Beim Diskonnektieren des Filterelements vom Filterkopf, etwa beim Austausch des Filterelements, kann es zu einem unerwünschten Rückstrom von gefiltertem Fluid aus der Fluidauslassleitung des Filterkopfs, d.h. einem partiellen oder sogar vollständigen Leerlaufen der Fluidleitung, beispielsweise Kraftstoffleitung, kommen. Die Fluidauslassleitung des Filterkopfs kann deshalb erfindungsgemäß mit einem Ventilkörper versehen sein, der durch das Anschließen des Filterelements am Filterkopf aus seiner den Fluidauslasskanal fluiddicht verschließenden Schließstellung in eine den Fluidauslasskanal freigebende Öffnungsstellung überführbar, insbesondere verschiebbar ist. Ist das Filterelement vom Filterkopf diskonnektiert, so kann kein Fluid aus dem Fluidauslasskanal strömen und die Umgebung verunreinigen. Durch den Ventilkörper kann darüber hinaus ein gewisser Schutz gegenüber dem Einsatz von nicht zulässigen bzw. ungeeigneten Filterelementen erreicht werden. Die Betriebssicherheit des Filtersystems kann dadurch erhöht werden.

Der Ventilkörper kann erfindungsgemäß allein entgegen der Schwerkraft aus seiner Schließstellung in seine Öffnungsstellung überführbar sein. Dies setzt jedoch eine präzise Passung und leichtgängige Führung des Ventilkörpers am Filterkopf voraus, die bei den zumeist als Guss- bzw. Spritzgussteil ausgeführten Filterköpfen ggf. nicht ausreichend zuverlässig gewährleistet werden kann. Ein höheres Maß an Funktionssicherheit kann erfindungsgemäß dadurch erreicht werden, dass der Ventilkörper gegen die Kraft eines Federelements aus seiner Schließstellung in seine Öffnungsstellung überführbar ist. Das Federelement kann insbesondere als eine Druckfeder ausgeführt sein.

Der Filterkopf kann einen Gehäusetopf aufweisen oder auch ausbilden. Das Filtersystem weist in diesem Fall einen am Gehäusetopf lösbar befestigbaren, insbesondere in den Gehäusetopf ein- oder auf diesen aufschraubbaren, Gehäusedeckel auf. Der Gehäusedeckel bildet gemeinsam mit dem Gehäusetopf ein Filtergehäuse, in dem das Filterelement austauschbar anordenbar ist. In diesem Fall ist das Filterelement somit in Form eines Filtereinsatzes ausgeführt. Der Gehäusedeckel und das Filterelement weisen vorzugsweise Bajonettverschlusselemente auf, um das Filterelement über einen Bajonettverschluss am Gehäusedeckel lösbar befestigen zu können. Erfindungsgemäß kann der Gehäusedeckel zumindest abschnittsweise aus einem zumindest transluzenten Material bestehen. Dadurch kann die Montage und Demontage des Filterelements durch eine Bedienperson visuell von außen überwacht und insgesamt weiter vereinfacht werden. Durch den Deckel aus dem zumindest transluzenten Material kann der Zustand des Wassersammelraums, insbesondere dessen Füllstand, überwacht und der Befüll- und/oder Entlüftungsvorgang inspiziert werden.

### Kurze Beschreibung der Zeichnungen

Die Erfindung wird nachfolgend anhand einer in der Zeichnung wiedergegebenen Ausführungsform näher erläutert. In der Zeichnung zeigen:
- Fig. 1: ein Filtersystem mit einem Filterkopf und einem Filtergehäuse zur austauschbaren Aufnahme eines Filterelements, in einer perspektivischen Ansicht;
- Fig. 2: das Filtersystem gemäß Fig. 1, in einer Schnittdarstellung;
- Fig. 3: eine freigestellte Ansicht des Filterkopfs des Filtersystems gemäß Fig. 1, in einer Schnittdarstellung;
- Fig. 4: eine vergrößerte Darstellung des in Fig. 2 mit "E" bezeichneten Detailausschnitts des Filtersystems, in einer Schnittdarstellung; und
- Fig. 5: eine vergrößerte Darstellung des in Fig. 2 mit "D" bezeichneten Detailausschnitts des Filtersystems, in einer Schnittdarstellung.

### Ausführungsform(en) der Erfindung

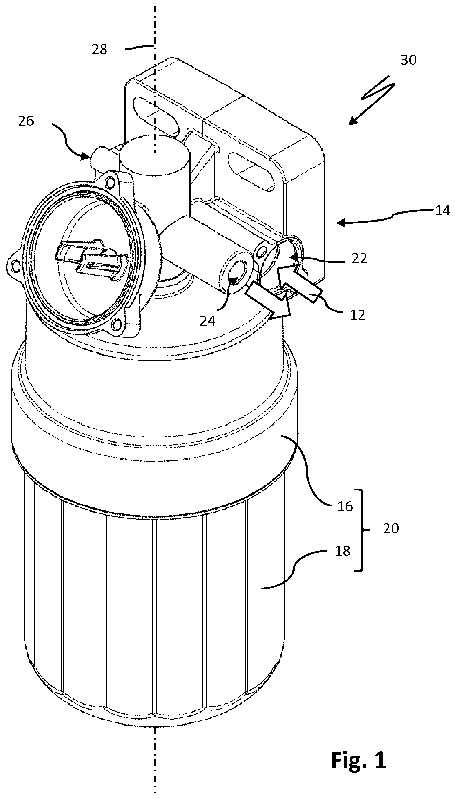

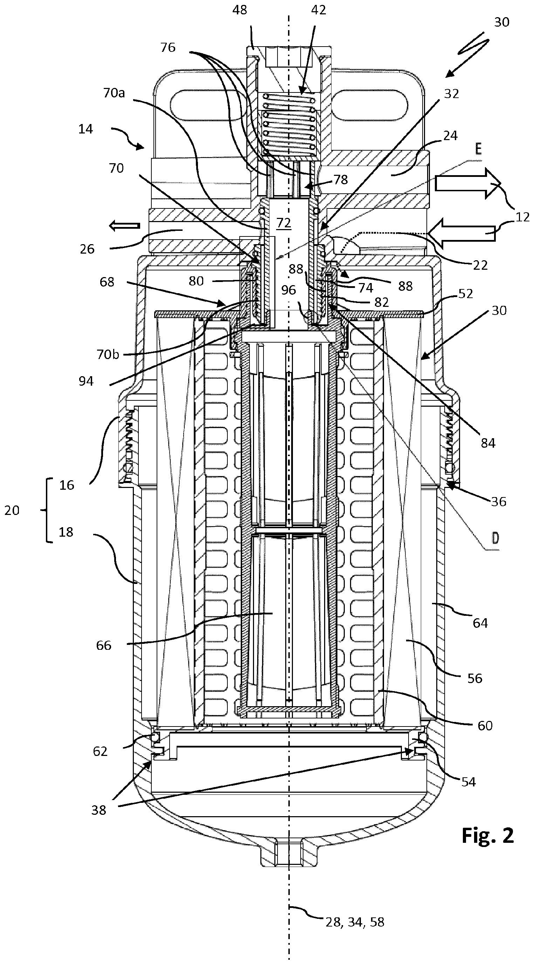

In **Fig. 1** und **2** ist ein Filtersystem **10** zum Herausfiltern von in einem Flüssigmedium oder Fluid **12,** wie beispielsweise Kraftstoff oder Öl, enthaltenen Verunreinigungen gezeigt. Das Filtersystem 10 umfasst einen Filterkopf **14** mit einen Gehäusetopf **16** und einem am Gehäusetopf 16 auf- oder einschraubbaren Gehäusedeckel **18.** Der Gehäusetopf 16 und der Gehäusedeckel bilden somit ein Filtergehäuse **20,** das der Aufnahme eines als Filtereinsatz ausgeführten Filterelements dient. Der Filterkopf 14 weist gemäß Fig. 1 eine Fluidzuleitung **22** für das zu filternde Fluid 12, eine Fluidauslassleitung **24** für das gefilterte Fluid sowie eine Entlüftungsleitung **26** auf, über die im Filterelement angesammeltes Gas bzw. Luft abströmen kann. Die Längsachse des Filtersystems 10 ist mit **28** bezeichnet.

In **Fig. 2** ist das Filtersystem 10 in einem Längsschnitt gezeigt. Das Filterelement **30** ist an einem Anschlussbereich **32** des Filterkopfs 14 lösbar hängend am Filterkopf 14 angeschlossen. Das Filterelement 30 erstreckt sich somit im Filterbetrieb in Lotrichtung **34** vom Filterkopf 14 nach unten weg. Der Gehäusetopf 16 weist eine im Betriebseinsatz des Filtersystems in Lotrichtung 34 nach unten weisende Öffnung **36** auf, die mittels des Gehäusedeckels 18 fluid- und druckdicht verschließbar ist. Gemäß Fig. 2 kann das Filterelement 30 über eine Bajonettverbindung bzw. -verschluss **38** mit dem Gehäusedeckel 18 lösbar gekoppelt sein. Dadurch kann das Filterelement 30 vereinfacht und mit einem minimierten Verschmutzungsrisiko vom Filterkopf 14 gelöst und aus dem Gehäusetopf 16 entnommen bzw. am Filterkopf 14 angeschlossen werden. Besteht der Gehäusedeckel 18 aus einem transluzenten Material, so kann der Bajonettverschluss 38 sowie der Austausch des Filterelements 30 visuell kontrolliert und dadurch insgesamt weiter vereinfacht werden.

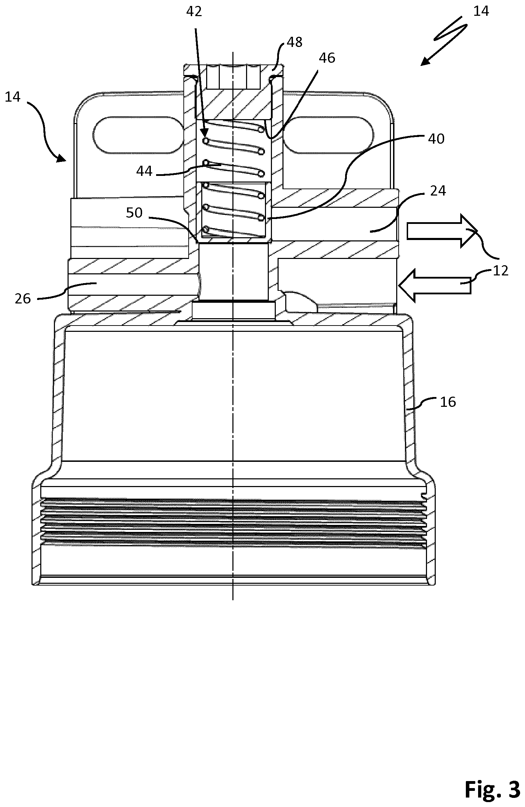

Die Fluidauslassleitung 24 des Filterkopfs 14 ist mit einem Ventilkörper **40** versehen. Der Ventilkörper 40 ist hier in einem Ventilsitz **42** des Filterkopfs 14 verschiebbar gelagert. Der Ventilkörper 40 kann gemäß Fig. 2 zylinderförmig ausgeführt sein und gegen die Kraft eines Federelements **44** aus einer in **Fig. 3** gezeigten Schließstellung in seine in **Fig. 3** gezeigte Öffnungsstellung bewegt werden. Ein Öffnungsanschlag **46** des Filterkopfs 14 kann beispielsweise durch eine Verschlussschraube **48** des Filterkopfs 14 gebildet sein. Durch die Verschlussschraube 48 kann der Ventilsitz 42 nach der Montage des Ventilkörpers 40 auf einfache Weise verschlossen werden. Zugleich kann dadurch eine Art Revisionszugang zum Ventilsitz 42 geschaffen werden. Ein Schließanschlag **50** des Ventilkörpers kann gemäß Fig. 2 durch eine Ringschulter des Filterkopfs 14 bzw. alternativ durch einen in einer Nut eingesetzten Sprengring oder dgl. gebildet sein.

Das Filterelement 30 weist gemäß Fig. 2 eine obere und eine untere Endscheibe **52**, **54** auf. Die Endscheiben 52, 54 sind hier ein integraler Bestandteil des als Filtereinsatz ausgeführten Filterelements 30. Zwischen den beiden Endscheiben **52**, **54** ist ein Filtermedium **56** angeordnet. Das Filtermedium 56 ist zur Mittel- bzw. Längsachse des Filterelements 30 ringförmig angeordnet und kann insbesondere in Form eines sternförmig gefalteten Balgs ausgebildet sein. Das Filtermedium 56 ist an den beiden Endscheiben 52, 54 jeweils fluiddicht befestigt. So kann das Filtermedium 56 mit den Endscheiben 52, 54 verklebt, verschweißt oder im Material der Endscheiben 52, 54 fluiddicht eingebettet sein. Das Filtermedium 56 ist hier vom Fluid 12 im Betriebseinsatz (= Filterbetrieb) in Richtung einer zur Längsachse **58** des Filterelements 30 radialen Richtung von außen nach innen durchströmbar. Zur radial innenseitigen Abstützung des Filtermediums 56 dient ein gitterförmig ausgeführtes Stütz- oder Mittelrohr 60. Das Mittelrohr 60 umgreift die Längsachse 58 des Filterelements 30. Das Filtermedium 56 kann am Mittelrohr **60** mittelbar oder unmittelbar anliegen.

Die untere Endscheibe 54 weist hier ein vorzugsweise elastomeres Dichtungselement **62** für einen Dichtsitz des Filterelements 30 am Gehäusedeckel 18 auf. Eine dem Filtermedium 56 fluidisch vorgeschaltete Rohseite des Filterelements 30 ist mit **64** und die dem Filtermedium fluidisch nachgeschaltet angeordnete Reinseite des Filterelements 30 ist insgesamt mit **66** bezeichnet.

Das Filterelement 30 weist an seinem im Filterbetrieb in Lotrichtung 34 nach oben weisenden Ende **68** einen Koaxialauslassstutzen **70** mit einem hier zentralen Fluidauslasskanal **72** für das gefilterte Flüssigkeitsmedium 12 und mit einem Entlüftungskanal **74** zur rein- und rohseitigen Entlüftung des Filterelements 30 auf. Der Koaxialauslassstutzen 70 erstreckt sich in axialer Richtung in den Filterkopf 14 hinein. Der Koaxialauslassstutzen 70 kann in radialer Richtung außenseitig über Dichtungselemente 62 am Filterkopf 14 dichtend anliegen. Ein Entlüftungskanal 74 umgreift den Fluidauslasskanal 72 zumindest abschnittsweise in einer zur Längsachse 58 des Filterelements 30 radialen Richtung. Der Koaxialauslassstutzen 70 weist mit anderen Worten zwei koaxial verlaufend angeordnete und hier miteinander einstückig ausgeführte Stutzensegmente 70a, 70b auf, zwischen denen der Entlüftungskanal 74 ausgebildet ist. Der Koaxialauslassstutzen 70 ist hier in einer zentralen Öffnung der ersten (oberen) Endscheibe 52 des Filterelements 30 im radialen Presssitz geklemmt gehalten angeordnet. Der Koaxialauslassstutzen 70 liegt in radialer Richtung innenseitig an einem Mittelrohr 60, insbesondere dem Randabschnitt **96,** und in radialer Richtung außenseitig an der oberen Endscheibe 52 des Filterelements 30 umlaufend an. Neben dem Mittelrohr 60 hat das Filterelement vorliegend einen koaxial innerhalb diesem angeordneten Endabscheider, der gewissermaßen auch ein Mittelrohr darstellt. Unter Endabscheider wird beispielsweise ein hydrophobes Sieb verstanden, das permeabel für Kraftstoff ist und Wasser zurückhält. Der Endabscheider weist beispielsweise eine Stützstruktur auf, auf der, radial innen oder außen, ein Siebgewebe mit einer vorbestimmten Maschenweite befestigt ist. Es kann demgemäß insbesondere vorgesehen sein, dass ein Abschnitt des Endabscheiders o. g. Randabschnitt 96 aufweist, an dem der Koaxialauslassstutzen 70 radial innenseitig anliegt.

Gemäß Fig. 2 sind am Koaxialauslassstutzen 70 einenends ein oder mehrere Betätigungsglieder **76** für den Ventilkörper 40 des Filterkopfs 14 angeordnet. Die Betätigungsglieder können insbesondere am Koaxialauslassstutzen 70 angeformt sein, so dass dieser als ein Spritzgussteil ausgeführt sein kann. Das bzw. die Betätigungsglieder 76 erstrecken sich vorzugsweise in axialer, insbesondere streng axialer, Richtung vom Koaxialauslassstutzen 70 weg. Zwischen wenigstens zwei der im Ausführungsbeispiel gezeigten mehreren Betätigungsglieder 76 ist eine radiale Durchtrittsöffnung **78** für das gefilterte Fluid ausgebildet, so dass das gefilterte Fluid 12 aus dem Fluidauslasskanal des Koaxialauslassstutzens über die Fluidauslassleitung 24 des Filterkopfs 14 abströmen kann.

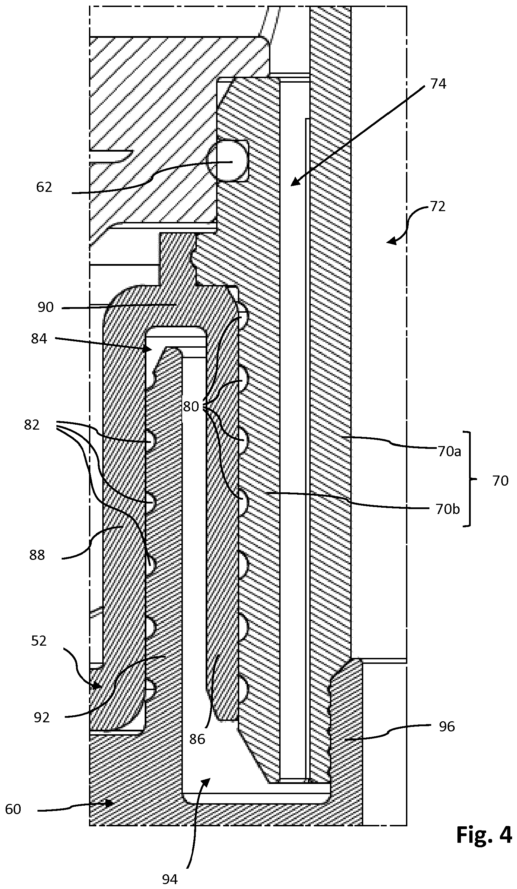

Zur Entlüftung der Rohseite 64 des Filterelements 30 dient ein erster Kapillarkanal **80**, der gemäß Fig. 2 und 4 mit dem Entlüftungskanal 74 fluidisch verbunden ist. Zur Entlüftung der Reinseite 66 des Filterelements 30 dient ein zweiter Kapillarkanal **82**, der ausgangsseitig mit dem Entlüftungskanal 74 fluidisch verbunden ist.

Die erste oder obere Endscheibe 52 des Filterelements 30 weist eine Ringnut **84** auf, die zur zweiten Endscheibe 54 hin, d. h. im Filterbetrieb in Lotrichtung 34 nach unten, offen ist. Die Ringnut 84 ist in radialer Richtung innenseitig durch einen ersten Wandabschnitt **86** der oberen Endscheibe 52 und in radialer Richtung außenseitig durch einen zweiten Wandabschnitt **88** der oberen Endscheibe 52 begrenzt, wobei der erste und der zweite Wandabschnitt 86, 88 über einen Rückenabschnitt **90** miteinander einstückig verbunden sind. Der erste Kapillarkanal 80 ist in radialer Richtung innenseitig durch den Koaxialauslassstutzen 70 und in radialer Richtung außenseitig durch den ersten Wandabschnitt 86 der Endscheibe 52 begrenzt. Der zweite Kapillarkanal 82 ist in radialer Richtung einerseits durch einen Endabschnitt **92** des Mittelrohrs 60, welcher in die Ringnut der oberen Endscheibe 52 eingreift, und andererseits durch den zweiten Wandabschnitt 88 der oberen Endscheibe 52 begrenzt. Die beiden Kapillarkanäle 80, 82 können jeweils spiralförmig um die Längsachse 58 des Filterelements 30 herum verlaufend angeordnet sein. Jeder Kapillarkanal 80, 82 ist über einen Siphon **94** mit dem Entlüftungskanal 74 fluidisch verbunden.

Der Koaxialauslassstutzen 70 ist hier einteilig ausgeführt. Alternativ kann der Koaxialstutzen auch mehrteilig ausgeführt sein. Im letztgenannten Fall weisen die Stutzensegmente **70a, 70b** vorzugsweise Distanzelemente in Form von Rippen, Noppen oder dgl. auf, über die die beiden Rohrstutzen abschnittsweise aneinander anliegen.

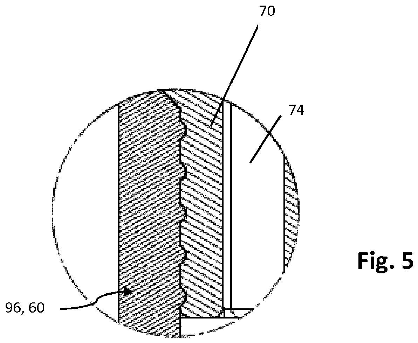

In **Fig. 5** ist der in Fig. 2 mit D bezeichnete Detailausschnitt des Filtersystems 10 in einer vergrößerten Darstellung gezeigt. Der Koaxialauslassstutzen 70 liegt innenumfangsseitig umlaufend an einem abgewinkelten Randabschnitt **96** des Mittelrohrs 60 dichtend an. Der Randabschnitt 96 und der Koaxialauslassstutzen 70 können dabei im gegenseitigen Gewindeeingriff stehen, um den Koaxialauslassstutzen 70 am Mittelrohr 60 zugfest festzulegen. Alternativ können der Randabschnitt **96** und der Koaxialauslassstutzen 70 über eine Schnappverbindung, insbesondere Ringschnappverbindung, verbunden sein.

## Patentansprüche

1. Filterelement (30) für ein Fluid (12), insbesondere Kraftstoff oder Öl, das insbesondere zum hängenden Anschluss an einem Filterkopf (14) vorgesehen ist, mit einem Filtermedium (56), das zur Längsachse (58) des Filterelements (30) ringförmig angeordnet und von dem zu filternden Fluid (12) in einer radialen Richtung durchströmbar ist, wobei das Filterelement (30) an seinem im Filterbetrieb in Lotrichtung (34) nach oben weisenden Ende (68) einen Koaxialauslassstutzen (70) mit einem Fluidauslasskanal (72) für das gefilterte Fluid (12) und mit einem Entlüftungskanal (74) zur rein- und/oder rohseitigen Entlüftung des Filterelements (30) aufweist, wobei der Entlüftungskanal (74) den Fluidauslasskanal (72) in radialer Richtung koaxial umgibt und zumindest abschnittsweise in Axialrichtung verläuft, wobei der Entlüftungskanal (74) eingangsseitig über einen ersten Kapillarkanal (80) mit einer dem Filtermedium (56) fluidisch vorgeschalteten Rohseite (64) des Filtermediums (56) verbunden ist.

2. Filterelement nach Anspruch 1, **dadurch gekennzeichnet, dass** der Koaxialauslassstutzen (70) einenends ein oder mehrere Betätigungsglieder (76) für einen Ventilkörper (40) des Filterkopfs (14) aufweist, die sich vorzugsweise in axialer Richtung von dem Fluidauslasskanal (72) weg erstrecken, wobei bevorzugt zumindest zwischen zweien der Betätigungsglieder (76) eine radiale Durchtrittsöffnung (78) für das gefilterte Fluid (12) ausgebildet ist.

3. Filterelement nach einem der vorhergehenden Ansprüche, **dadurch gekennzeichnet, dass** der erste Kapillarkanal (80) in radialer Richtung innenseitig durch den Koaxialauslassstutzen (70) und in radialer Richtung außenseitig durch einen ersten Wandabschnitt (86) einer Endscheibe des Filterelements (30) begrenzt ist.

4. Filterelement nach Anspruch 3, **dadurch gekennzeichnet, dass** der Entlüftungskanal (74) eingangsseitig über einen zweiten Kapillarkanal (82) mit einer dem Filtermedium (56) fluidisch nachgeschaltet angeordneten Reinseite (66) des Filterelements (30) verbunden ist, wobei bevorzugt der zweite Kapillarkanal (82) in radialer Richtung einerseits durch einen Endabschnitt (92) eines rohrförmigen Stützkörpers des Filterelements, insbesondere ein Mittelrohr (60), und andererseits durch einen Wandabschnitt (86, 88) der Endscheibe (52) des Filterelements begrenzt ist.

5. Filterelement nach Anspruch 3 oder 4, **dadurch gekennzeichnet, dass** jeder Kapillarkanal (80, 82) über einen Siphon (94) mit dem Entlüftungskanal (74) fluidisch verbunden ist.

6. Filterelement nach Anspruch 4 oder 5, **dadurch gekennzeichnet, dass** der Kapillarkanal (80, 82) zumindest abschnittsweise in axialer Richtung verlaufend oder zumindest abschnittsweise schraubenförmig um die Längsachse (58) verlaufend angeordnet ist.

7. Filterelement nach einem der Ansprüche 4 bis 6, **dadurch gekennzeichnet, dass** der Endabschnitt (92) des rohrförmigen Stützkörpers in axialer Richtung in eine Ringnut (84) der Endscheibe eingreift, die in radialer Richtung innenseitig durch den ersten Wandabschnitt (86) und außenseitig durch einen zweiten Wandabschnitt (88) begrenzt ist, wobei der erste und der zweite Wandabschnitt (86, 88) über einen Rückenabschnitt (90) miteinander einstückig verbunden sind.

8. Filterelement nach einem der vorhergehenden Ansprüche, **dadurch gekennzeichnet, dass** der Koaxialauslassstutzen (70) einteilig oder mehrteilig, insbesondere zweiteilig, ausgeführt ist.

9. Filterelement nach einem der Ansprüche 3 bis 8, **dadurch gekennzeichnet, dass** das Filterelement (30) eine zweite Endscheibe (54) umfasst, wobei das Filtermedium (56) in axialer Richtung zwischen der Endscheibe (52) und der zweiten Endscheibe ( 54) angeordnet und vorzugsweise stirnseitig an den beiden Endscheiben (52, 54) befestigt, insbesondere mit diesen verklebt, verschweißt oder im Material der beiden Endscheiben (52, 54) eingebettet gehalten angeordnet ist.

10. Filterelement nach einem der vorhergehenden Ansprüche, **dadurch gekennzeichnet, dass** das Filterelement (30) zumindest ein Teil einer Bajonettverbindung (38) aufweist, mit dem das Filterelement (30) lösbar mit zumindest einem Gehäusebauteil, insbesondere einem Gehäusedeckel (18) eines Filtersystems (10) koppelbar ist, wobei bevorzugt das Bajonettverbindungsteil (38) an einem dem Koaxialauslassstutzen (70) abgewandten Ende des Filterelements (30) vorliegt, das besonders bevorzugt im Filterbetrieb in Lotrichtung (34) nach unten weist.

11. Filtersystem (10) für ein Fluid (12), insbesondere Kraftstoff oder Öl, umfassend:
- einen Filterkopf (14) mit einem Fluidzuleitung (22) für zu filterndes Fluid,
mit einer Fluidauslassleitung (24) für das gefilterte Fluid (12) und mit einer Entlüftungsleitung 26); und
- ein am Filterkopf (14) austauschbar anschließbares Filterelement (30), insbesondere hängend anschließbares Filterelement (30), nach einem der vorhergehenden Ansprüche.

12. Filtersystem nach Anspruch 11, **dadurch gekennzeichnet, dass** die Fluidauslassleitung (24) mit einem Ventilkörper (40) versehen ist, der durch das Anschließen des Filterelements (30) am Filterkopf (14) aus seiner die Fluidauslassleitung (24) fluiddicht verschließenden Schließstellung in eine die Fluidauslassleitung (24) freigebende Öffnungsstellung überführbar, insbesondere verschiebbar ist.

13. Filtersystem nach Anspruch 12, **dadurch gekennzeichnet, dass** der Ventilkörper (40) durch die an dem Koaxialauslassstutzen (70) des Filterelements (30) vorliegenden Betätigungsglieder (76) betätigbar ist.

14. Filtersystem nach Anspruch 12 oder 13, **dadurch gekennzeichnet, dass** der Ventilkörper (40) gegen die Kraft eines Federelements (44) aus seiner Schließstellung in seine Öffnungsstellung überführbar ist.

15. Filtersystem nach einem der Ansprüche 11 bis 14, **dadurch gekennzeichnet, dass** der Filterkopf (14) einen Gehäusetopf (16) aufweist, insbesondere ausbildet, und dass das Filtersystem (10) einen am Gehäusetopf (16) lösbar befestigbaren, insbesondere in den Gehäusetopf (16) ein- oder auf diesem aufschraubbaren, Gehäusedeckel (18) umfasst, der gemeinsam mit dem Gehäusetopf (16) ein Filtergehäuse (20) bildet, in dem das Filterelement (30) anordenbar ist.

## Claims

1. Filter element (30) for a fluid (12), in particular fuel or oil, in particular provided for a suspended connection to a filter head (14), having a filter medium (56) annularly disposed with respect to the longitudinal axis (58) of the filter element (30) and capable of being flowed through in a radial direction by the fluid (12) to be filtered, wherein the filter element (30) features, at its end (68) pointing to the top in perpendicular direction (34) during filtering operation, a coaxial outlet connection (70) having a fluid outlet channel (72) for the filtered fluid (12) and having a vent duct (74) for venting of the filter element (30) on the clean and/or raw side, wherein the vent duct (74) coaxially surrounds the fluid outlet channel (72) in the radial direction and extends, at least sectionwise, in the axial direction, wherein the vent duct (74) is connected on the inlet side via a first capillary channel (80) to a raw side (64) of the filter medium (56) fluidically disposed upstream of the filter medium (56).

2. Filter element according to claim 1, **characterized in that** the coaxial outlet connection (70) features at one end one or a plurality of operating members (76) for a valve body (40) of the filter head (14) which preferably extend in axial direction away from the fluid outlet duct (72), wherein preferably a radial passage opening (78) for the filtered fluid (12) is provided at least between two of the operating members (76).

3. Filter element according to one of the preceding claims, **characterized in that** the first capillary channel (80) is limited in the radial direction on the interior side by the coaxial outlet connection (70) and in the radial direction on the exterior side by a first wall portion (86) of an end disc of the filter element (30).

4. Filter element according to claim 3, **characterized in that** the vent duct (74) is connected on the inlet side via a second capillary channel (82) to a clean side (66) of the filter element (30) fluidically disposed downstream of the filter media (56), wherein preferably the second capillary channel (82) is limited, on the one hand, in the radial direction by an end portion (92) of a tubular support body of the filter element, in particular a central tube (60), and, on the other hand, by a wall portion (86, 88) of the end disc (52) of the filter element.

5. Filter element according to claim 3 or 4, **characterized in that** each capillary channel (80, 82) is fluidically connected to the vent duct (74) via a siphon (94).

6. Filter element according to claim 4 or 5, **characterized in that** the capillary channel (80, 82) is disposed at least sectionwise extending in the axial direction or at least sectionwise extending helically around the longitudinal axis (58).

7. Filter element according to one of the claims 4 to 6, **characterized in that** the end portion (92) of the tubular support body engages in the axial direction into an annular groove (84) of the end disc, which is limited in the radial direction on the interior side by the first wall portion (88) and on the exterior side by a second wall portion (88), wherein the first and the second wall portions (86, 88) are connected to each other in one piece via a back portion (90).

8. Filter element according to one of the preceding claims, **characterized in that** the coaxial outlet connection (70) is realized in one piece or in multiple pieces, in particular in two pieces.

9. Filter element according to one of the claims 3 to 8, **characterized in that** the filter element (30) comprises a second end disc (54), wherein the filter media (56) is disposed in the axial direction between the end disc (52) and the second end disc (54) and preferably attached frontally to the two end discs (52, 54), in particular glued and welded thereto or held embedded in the material of the two end discs (52, 54).

10. Filter element according to one of the preceding claims, **characterized in that** the filter element (30) features at least one part of a bayonet connection (38) with which the filter element (30) is detachably coupleable with at least one housing component, in particular with one housing cover (18) of a filter system (10), wherein the bayonet connection part (38) is preferably provided at an end of the filter element (30) facing away from the coaxial outlet connection (70) and particularly preferably points downward in the perpendicular direction (34) during filter operation.

11. Filter system (10) for a fluid (12), in particular fuel or oil, comprising:
- a filter head (14) having a fluid supply line (22) for fluid to be filtered, having a fluid outlet line (24) for filtered fluid (12) and having a vent line (26); and
- a filter element (30) which can be replaceably connected to the filter head (14), in particular a filter element (30) which can be connected in a suspended manner, according to one of the preceding claims.

12. Filter system according to claim 11, **characterized in that** the fluid outlet line (24) is provided with a valve body (40) which, by connecting the filter element (30) to the filter head (14), is transferable, in particular moveable, from its closed position closing the fluid outlet line (24) in a fluid-tight manner into an opening position releasing the fluid outlet line (24).

13. Filter system according to claim 12, **characterized in that** the valve body (40) can be operated by the operating members (76) provided on the coaxial outlet connection (70) of the filter system (30).

14. Filter system according to claim 12 or 13, **characterized in that** the valve body (40) is transferable against the force of a spring element (44) from its closed position into its opening position.

15. Filter system according to one of the claims 11 to 14, **characterized in that** the filter head (14) features, in particular forms, a housing pot (16), and that the filter system (10) comprises a housing cover (18) which can be detachably attached to the housing pot (16), in particular can be screwed into or onto the housing pot (16), the housing cover forming together with the housing pot (16) a filter housing (20) in which the filter element (30) can be disposed.

## Revendications

1. Élément filtrant (30) pour un fluide (12), notamment pour du carburant ou de l'huile, destiné notamment à être raccordé en suspension à une tête de filtre (14), ayant un milieu filtrant (56) qui est placé de manière annulaire par rapport à l'axe longitudinal (58) de l'élément filtrant (30) et qui peut être parcouru en sens radial par le fluide à filtrer (12), l'élément filtrant (30) présentant, au niveau de son extrémité (68) dirigée vers le haut en sens vertical (34) en mode de filtration, une tubulure de sortie coaxiale (70) ayant un canal de sortie du fluide (72) pour le fluide filtré (12) et ayant un canal de purge (74) servant à la purge du côté pur et/ou du côté brut de l'élément filtrant (30), le canal de purge (74) entourant coaxialement en sens radial le canal de sortie du fluide (72) et évoluant, au moins sur certaines sections, en sens axial, le canal de purge (74) étant relié, du côté entrée, par l'intermédiaire d'un premier canal capillaire (80), à un côté brut (64) du milieu filtrant (56), situé fluidiquement en amont du milieu filtrant (56).

2. Élément filtrant selon la revendication 1, **caractérisé en ce que** la tubulure de sortie coaxiale (70) présente à une extrémité un ou une pluralité d'éléments d'actionnement (76) pour un corps de soupape (40) de la tête de filtre (14), qui s'écartent de préférence en sens axial du canal de sortie du fluide (72), une ouverture de passage (78) radiale étant de préférence prévue pour le fluide filtré (12) au moins entre deux des éléments d'actionnement (76).

3. Élément filtrant selon l'une quelconque des revendications précédentes, **caractérisé en ce que** le premier canal capillaire (80) est limité, en sens radial, à l'intérieur, par la tubulure de sortie coaxiale (70), et en sens radial, à l'extérieur, par une première section de paroi (86) d'un disque d'extrémité de l'élément filtrant (30).

4. Élément filtrant selon la revendication 3, **caractérisé en ce que** le canal de purge (74) est relié, du côté entrée, par l'intermédiaire d'un second canal capillaire (82), à un côté pur (66) de l'élément filtrant (30), situé fluidiquement en aval du milieu filtrant (56), le second canal capillaire (82) étant de préférence limité, en sens radial, d'une part par une section d'extrémité (92) d'un élément d'appui tubulaire de l'élément filtrant, notamment un tube central (60), et d'autre part par une section de paroi (86, 88) du disque d'extrémité (52) de l'élément filtrant.

5. Élément filtrant selon la revendication 3 ou 4, **caractérisé en ce que** chaque canal capillaire (80, 82) est relié fluidiquement au moyen d'un siphon (94) au canal de purge (74).

6. Élément filtrant selon la revendication 4 ou 5, **caractérisé en ce que** le canal capillaire (80, 82) est disposé, au moins sur certaines sections, en sens axial, ou, au moins sur certaines sections, en forme de vis, autour de l'axe longitudinal (58).

7. Élément filtrant selon l'une quelconque des revendications 4 à 6, **caractérisé en ce que** la section d'extrémité (92) de l'élément d'appui tubulaire s'engrène, en sens axial, dans une rainure annulaire (84) du disque d'extrémité, qui est limité, en sens radial, à l'intérieur, par la première section de paroi (86) et, à l'extérieur, par une seconde section de paroi (88), la première et la seconde sections de paroi (86, 88) étant reliées l'une à l'autre d'un seul tenant au moyen d'une section dorsale (90).

8. Élément filtrant selon l'une quelconque des revendications précédentes, **caractérisé en ce que** la tubulure de sortie coaxiale (70) est réalisée d'un seul tenant ou en plusieurs parties, notamment en deux parties.

9. Élément filtrant selon l'une quelconque des revendications 3 à 8, **caractérisé en ce que** l'élément filtrant (30) comprend un second disque d'extrémité (54), le milieu filtrant (56) étant disposé en sens axial entre le disque d'extrémité (52) et le second disque d'extrémité (54) et étant de préférence fixé frontalement aux deux disques d'extrémité (52, 54), notamment collé ou soudé à ces éléments ou maintenu incorporé dans le matériau des deux disques d'extrémité (52, 54).

10. Élément filtrant selon l'une quelconque des revendications précédentes, **caractérisé en ce que** l'élément filtrant (30) présente au moins une partie d'un raccord à baïonnette (38) au moyen duquel l'élément filtrant (30) peut être raccordé de façon amovible avec au moins un composant du boîtier, notamment un couvercle de boîtier (18) d'un système de filtre (10), la pièce de raccord à baïonnette (38) se situant de préférence à une extrémité de l'élément filtrant (30) opposée à la tubulure de sortie coaxiale (70) et étant dirigée, de façon particulièrement préférée, vers le bas à la verticale (34) en mode de filtration.

11. Système de filtre (10) pour un fluide (12), notamment pour du carburant ou de l'huile, comprenant :
- une tête de filtre (14) ayant une conduite d'alimentation en fluide (22) pour le fluide à filtrer, ayant une conduite de sortie du fluide (24) pour le fluide filtré (12) et ayant une conduite de purge (26) ; et
- un élément filtrant (30) pouvant être raccordé de manière échangeable à la tête de filtre (14), notamment un élément filtrant (30) pouvant être raccordé en suspension, selon l'une quelconque des revendications précédentes.

12. Système de filtre selon la revendication 11, **caractérisé en ce que** la conduite de sortie du fluide (24) est dotée d'un corps de soupape (40) qui peut être transféré, notamment déplacé, par raccordement de l'élément filtrant (30) à la tête de filtre (14), de sa position de fermeture obturant la conduite de sortie du fluide (24) de manière étanche aux fluides à une position d'ouverture libérant la conduite de sortie du fluide (24).

13. Système de filtre selon la revendication 12, **caractérisé en ce que** le corps de soupape (40) peut être actionné par les éléments d'actionnement (76) situés sur la tubulure de sortie coaxiale (70) de l'élément filtrant (30).

14. Système de filtre selon la revendication 12 ou 13, **caractérisé en ce que** le corps de soupape (40) peut être transféré, contre la force d'un élément de ressort (44), de sa position de fermeture à sa position d'ouverture.

15. Système de filtre selon l'une des revendications 11 à 14, **caractérisé en ce que** la tête de filtre (14) présente, notamment forme un pot de boîtier (16), et que le système de filtre (10) comprend un couvercle de boîtier (18) pouvant être fixé de manière amovible au pot de boîtier (16), notamment pouvant être vissé dans ou sur le pot de boîtier (16), le couvercle de boîtier formant avec le pot de boîtier (16) un boîtier de filtre (20) à l'intérieur duquel l'élément filtrant (30) peut être placé.
